# EUROPEAN PATENT APPLICATION

(11) **EP 4 787 716 A1**
(43) Date of publication of application: **05.08.2026**
(21) Application number: 25155708.8
(22) Date of filing: 04.02.2025
(51) Int. Cl.: H04B 5/43, H04B 5/73, H04B 5/40

(54) **NFC DEVICE AND OPERATING METHOD**

(71) Applicant: NXP B.V., 5656 AG Eindhoven (NL)
(72) Inventor: Haslinger, Dorian, 5656 AG Eindhoven (NL); Neophytou, Kyriakos, 5656 AG Eindhoven (NL)
(74) Representative: Krott, Michel

(57) **Abstract**

In accordance with a first aspect of the present disclosure, a near field communication (NFC) device is provided, comprising: a first NFC antenna; an NFC unit operatively coupled to said first NFC antenna; and a field detection unit comprising a second NFC antenna, wherein said field detection unit is configured to detect, when operated in a first state, whether an electromagnetic field is present on the first NFC antenna by tuning the second NFC antenna to the operating frequency of the first NFC antenna and by detecting whether said electromagnetic field is present on the second NFC antenna. In accordance with a second aspect of the present disclosure, a corresponding method of operating an NFC device is conceived.

## Description

### TECHNICAL FIELD

The present disclosure relates to a near field communication (NFC) device. Furthermore, the present disclosure relates to a corresponding method of operating an NFC device.

### BACKGROUND

NFC refers to a set of communication protocols that enable two electronic devices to establish communication by bringing them within proximity of each other. The communication range of NFC is typically in the order of centimeters (e.g., 10 centimeters or less). NFC technology can be used to carry out various transactions, such as transactions for accessing buildings, transactions for accessing public transportation sites or vehicles, and payment transactions. For these purposes, physical NFC-enabled transaction cards are often used. Such transaction cards are often referred to as smart cards. Accordingly, different types of transaction cards exist, such as access cards, transit cards and payment cards. Nowadays, NFC-enabled mobile devices such as smart phones may be used to carry out similar transactions. For this purpose, digital representations of physical transaction cards are typically loaded into the mobile devices. These digital representations may be referred to as emulated cards or embedded cards. Furthermore, so-called NFC readers may be used to communicate and exchange data with physical NFC-enabled transaction cards and/or emulated or embedded cards.

### SUMMARY

In accordance with a first aspect of the present disclosure, a near field communication (NFC) device is provided, comprising: a first NFC antenna; an NFC unit operatively coupled to said first NFC antenna; and a field detection unit comprising a second NFC antenna, wherein said field detection unit is configured to detect, when operated in a first state, whether an electromagnetic field is present on the first NFC antenna by tuning the second NFC antenna to the operating frequency of the first NFC antenna and by detecting whether said electromagnetic field is present on the second NFC antenna.

In one or more embodiments, the field detection unit is further configured to tune, when operated in a second state, the second NFC antenna away from the operating frequency of the first NFC antenna.

In one or more embodiments, the field detection unit further comprises a controllable switch and a plurality of capacitors coupled to said switch, wherein said capacitors are configured to be shorted to ground by controlling said switch, so as to tune the second NFC antenna away from said operating frequency of the first NFC antenna.

In one or more embodiments, the NFC device further comprises an analog-to-digital converter (ADC), wherein the field detection unit further comprises a tuning capacitor coupled to the switch, a rectifier coupled to the tuning capacitor, and a filter coupled to the rectifier and to an input of said ADC.

In one or more embodiments, the rectifier is a full bridge rectifier or a half bridge rectifier.

In one or more embodiments, the NFC device further comprises a controller configured to receive an output of the ADC.

In one or more embodiments, the controller is configured to generate an error message if the output of the ADC indicates that the electromagnetic field is not present on the second NFC antenna.

In one or more embodiments, the field detection unit is configured to be operated in the first state when the NFC device operates in a low-power card detection (LPCD) mode or in an ultra-low-power card detection (u-LPCD) mode.

In one or more embodiments, the field detection unit is configured to be operated in the first state when the NFC device operates in a regular communication mode.

In one or more embodiments, a vehicle comprises an NFC device of the kind set forth.

In accordance with a second aspect of the present disclosure, a method of operating a near field communication (NFC) device is conceived, the NFC device comprising a first NFC antenna, an NFC unit operatively coupled to the first NFC antenna, and a field detection unit including a second NFC antenna, the method comprising: causing the field detection unit to be operated in a first state; and detecting, by the field detection unit, when operated in the first state, whether an electromagnetic field is present on the first NFC antenna by tuning the second NFC antenna to the operating frequency of the first NFC antenna and by detecting whether said electromagnetic field is present on the second NFC antenna.

In one or more embodiments, the method further comprises causing the field detection unit to be operated in a second state, wherein the field detection unit, when operated in the second state, tunes the second NFC antenna away from the operating frequency of the first NFC antenna.

In one or more embodiments, the field detection unit further comprises a controllable switch and a plurality of capacitors coupled to said switch, and wherein the method comprises shorting said capacitors to ground by controlling said switch, so as to tune the second NFC antenna away from said operating frequency of the first NFC antenna.

In one or more embodiments, the field detection unit is caused to be operated in the first state when the NFC device operates in a low-power card detection (LPCD) mode or in an ultra-low-power card detection (u-LPCD) mode.

In one or more embodiments, the field detection unit is caused to be operated in the first state when the NFC device operates in a regular communication mode.

### DESCRIPTION OF DRAWINGS

Embodiments will be described in more detail with reference to the appended drawings.
Fig. 1 shows an illustrative embodiment of an NFC device.
Fig. 2 shows an illustrative embodiment of a method of operating an NFC device.
Fig. 3 shows an illustrative embodiment of a field detection unit.
Fig. 4 shows another illustrative embodiment of a method of operating an NFC device.
Fig. 5 shows a further illustrative embodiment of a method of operating an NFC device.
Figs. 6A and 6B show simulation results for an NFC device of the kind set forth.
Figs. 7A to 7C show a simulated impedance of an NFC antenna under test.

### DESCRIPTION OF EMBODIMENTS

NFC is an established technology for proximity communication for various use cases. In specific applications and use cases - for example, automotive applications - it is important that the correct operation of an NFC antenna can be verified at any time, for example during the production of an NFC device or when the NFC device is already used in the field. More specifically, an NFC integrated circuit (IC) can fail to produce an electromagnetic field in case of, for instance, a disconnected antenna, a broken antenna, or an IC malfunction. Therefore, the functionality of the antenna, and in particular the field presence, should be verified. This is important, because a failure of activating the NFC field may result in communication errors of the NFC device, and consequently to user dissatisfaction.

Now discussed are an NFC device and a corresponding method of operating an NFC device, which facilitate verifying whether an electromagnetic field is present on an NFC antenna which is integrated into said NFC device. This, in turn, may facilitate avoiding communication errors of the NFC device. The presently disclosed NFC device may, for example, be integrated into a vehicle.

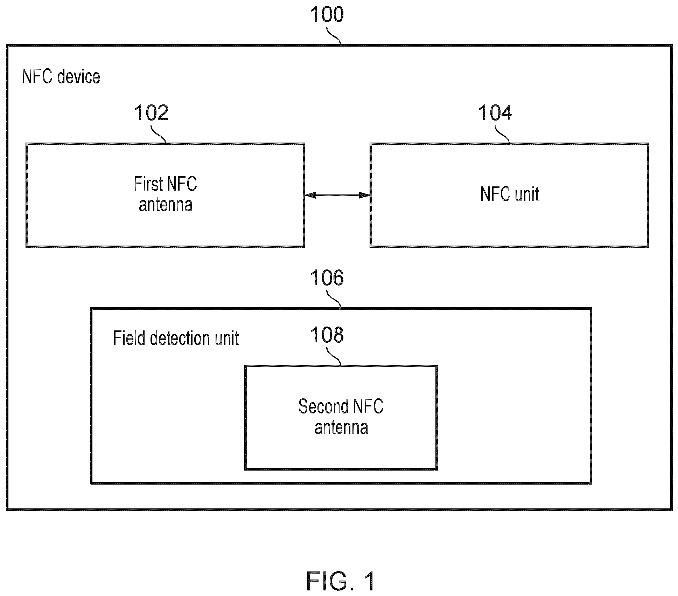

**Fig. 1** shows an illustrative embodiment of an NFC device 100. The NFC device 100 comprises a first NFC antenna 102 and an NFC unit 104 operatively coupled to the first NFC antenna 102. Furthermore, the NFC device 100 comprises a field detection unit 106 comprising a second NFC antenna 108. The field detection unit 106 is configured to detect, when operated in a first state, whether an electromagnetic field is present on the first NFC antenna 102 by tuning the second NFC antenna 108 to the operating frequency of the first NFC antenna 102 and by detecting whether said electromagnetic field is present on the second NFC antenna 108. By integrating a field detection unit 106 of the kind set forth into the NFC device 100, it may easily be verified whether an electromagnetic field is present on the main antenna of the NFC device 100 (i.e., on the first NFC antenna 102). More specifically, the field detection unit 106 is implemented as a sniffer device that is able to detect whether the electromagnetic field is present on the first NFC antenna 102.

The skilled person will appreciate that tuning the second NFC antenna 108 to the operating frequency of the first NFC antenna 102 does not imply that the operating frequency of the second NFC antenna 108 should become exactly the same as the operating frequency of the first NFC antenna 102. Rather, the operating frequency of the second NFC antenna 108 should become close enough to the operating frequency of the first NFC antenna 102, while taking a certain margin into account. For example, if the operating frequency of the first NFC antenna 102 is 13.56 MHz, then a margin of 1 MHz may be acceptable. In other words, in this example, the operating frequency of the second NFC antenna 108 should fall within the range of 12.56 MHz to 14.56 MHz, so as to be properly tuned to the operating frequency of the first NFC antenna 102.

In one or more embodiments, the field detection unit is further configured to tune, when operated in a second state, the second NFC antenna away from the operating frequency of the first NFC antenna. In this way, the field detection unit may prevent a disturbance on the first NFC antenna, for example when no test is being performed. More specifically, it may be avoided that the field detection unit causes a detuning of the impedance of the first NFC antenna, resulting from its close proximity to the first NFC antenna. In one or more embodiments, the field detection unit further comprises a controllable switch and a plurality of capacitors coupled to said switch, wherein said capacitors are configured to be shorted to ground by controlling said switch, so as to tune the second NFC antenna away from said operating frequency of the first NFC antenna. In this way, the second NFC antenna may easily be tuned away from the operating frequency of the first NFC antenna. In other words, by controlling said switch the capacitors can be shorted to ground, so that the field detection unit is effectively operated in the second state.

In one or more embodiments, the NFC device further comprises an analog-to-digital converter (ADC), and the field detection unit further comprises a tuning capacitor coupled to the switch, a rectifier coupled to the tuning capacitor, and a filter coupled to the rectifier and to an input of said ADC. Using this arrangement, the electromagnetic field detection may be performed in a practical and efficient way. Furthermore, in a practical implementation, the rectifier is a full bridge rectifier or a half bridge rectifier.

In one or more embodiments, the NFC device further comprises a controller configured to receive an output of the ADC. In this way, the NFC device may be enabled to take an appropriate action in response to detecting that, for example, no electromagnetic field is present. Furthermore, in one or more embodiments, the controller is configured to generate an error message if the output of the ADC indicates that the electromagnetic field is not present on the second NFC antenna. In this way, a malfunctioning of the main antenna of the NFC device may easily be reported to, for example, a user or maintenance personnel. In a practical implementation, the field detection unit is configured to be operated in the first state when the NFC device operates in a low-power card detection (LPCD) mode or in an ultra-low-power card detection (u-LPCD) mode. Furthermore, in another practical implementation, the field detection unit is configured to be operated in the first state when the NFC device operates in a regular communication mode.

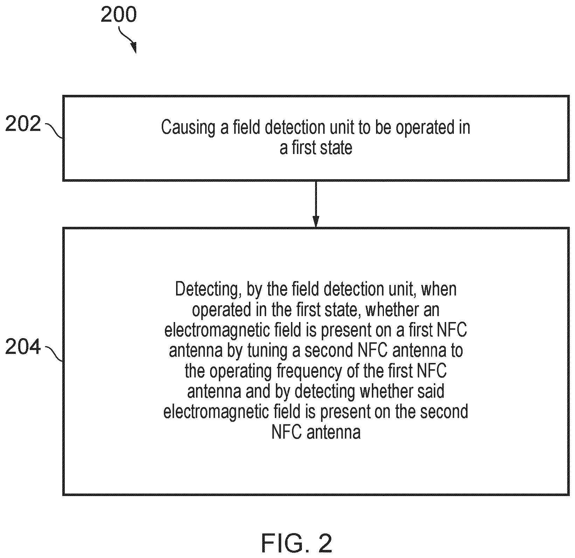

**Fig. 2** shows an illustrative embodiment of a method 200 of operating an NFC device, the NFC device comprising a first NFC antenna, an NFC unit operatively coupled to the first NFC antenna, and a field detection unit including a second NFC antenna. The method 200 comprises the following steps. At 202, the field detection unit is caused to be operated in a first state. Furthermore, at 204, the field detection unit, when operated in the first state, detects whether an electromagnetic field is present on the first NFC antenna by tuning the second NFC antenna to the operating frequency of the first NFC antenna and by detecting whether said electromagnetic field is present on the second NFC antenna. As mentioned above with reference to the corresponding NFC device shown in Fig. 1, by integrating a field detection unit of the kind set forth into the NFC device, it may easily be verified whether an electromagnetic field is present on the main antenna of the NFC device.

In accordance with the present disclosure, a tunable NFC sniffer may be integrated into an NFC device, to check whether an electromagnetic field is present on a main antenna of said NFC device. The NFC sniffer may include a detuning switch, a full bridge rectifier or a half bridge rectifier, and a low-pass filter. The detuning switch may be controlled in such a manner as to tune the sniffer close to the operating frequency of the NFC device during the check, and to detune the sniffer when the check is not performed. In this way, the NFC sniffer will have a minimal impact on the main antenna when the check is not needed. In particular, by controlling the detuning switch, the NFC sniffer (i.e., the field detection unit) may be operated either in the first state or in the second state. More specifically, when the detuning switch is off, the NFC sniffer is effectively operated in the first state, in which it performs the aforementioned check (i.e., in which it detects whether an electromagnetic field is present on the main antenna). When the detuning switch is on, the NFC sniffer is effectively operated in the second state, in which it does not perform the aforementioned check (i.e., the sniffer's antenna is tuned away from the operating frequency of the main antenna).

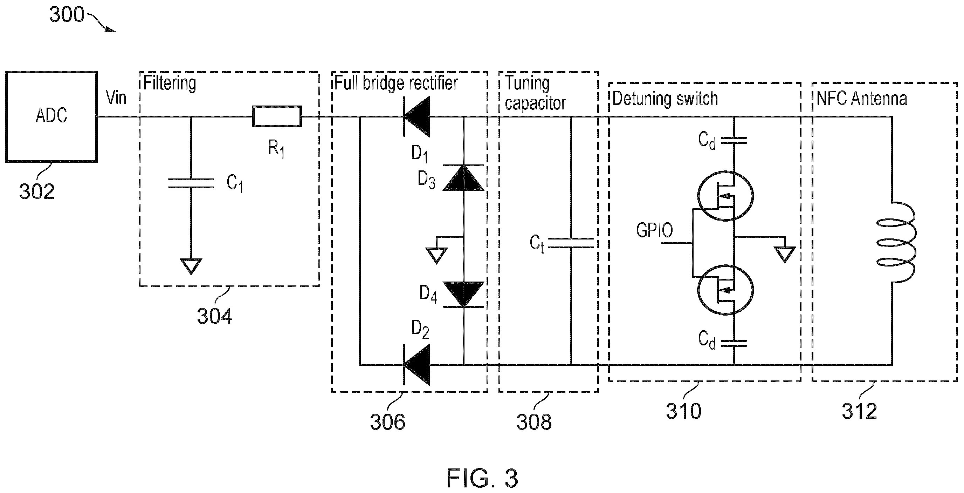

**Fig. 3** shows an illustrative embodiment of a field detection unit 300, which represents a non-limiting example of a sniffer device of the kind set forth. The field detection unit 300 comprises an ADC 302, a filtering unit 304, a full bridge rectifier 306, a tuning capacitor 308, a detuning switch 310, and an NFC antenna 312 (i.e., a second NFC antenna of the kind set forth). The field detection unit 300 is placed within proximity of the main antenna (not shown) of the NFC device (i.e., a first NFC antenna of the kind set forth, also referred to as the antenna-under-test (AUT)). To avoid a significant detuning of the AUT's impedance, the detuning switch 310 is provided. In this example, the detuning switch 310 is controlled by an external field detection unit controller (not shown) through a general-purpose input/output (GPIO) interface. The NFC antenna 312 is tuned by the tuning capacitor Ct when the MOSFET-based detuning switch 310 is switched off. When the GPIO input of the MOSFET-based detuning switch 310 is high, the detuning switch 310 will turn on and short the two additional capacitors Cd. These two capacitors Cd will detune the NFC antenna 312. Therefore, when the electromagnetic field detection does not need to be performed, the NFC antenna 312 can be detuned, which ensures a minimal impact on the AUT's impedance.

The full bridge rectifier 306 and the filtering unit 304 (e.g., a low-pass filter) are used to convert the AC signal to a DC signal. Then, the DC signal may be measured using an ADC. This ADC may form part of a host microcontroller, which is used to execute software including NFC libraries and application code. Alternatively, the ADC may be integrated into the sniffer device. The electromagnetic field detection may be carried out when the NFC device operates in a low-power card detection (LPCD) mode or an ultra-low-power card detection (u-LPCD) mode. Alternatively, the electromagnetic field detection may be carried out when the NFC device operates in a regular communication mode, i.e., during normal operation of the NFC device. In both cases, the electromagnetic field detection may ensure that the NFC front-end is properly functioning.

It is noted that a primary device, i.e. a reader, should normally enable its RF field and poll for counterparts in all different communication technologies (such as NFC-A, NFC-B, NFC-F, NFC-V) to detect communication counterparts. Especially for battery-powered devices (e.g. mobile devices, wearables, door lock readers) this is not efficient and reduces device availability due to power limitations. Therefore, a technique called low power card detection (LPCD) or ultra-low-power card detection (u-LPCD) may be applied, which extends the battery lifetime by using short RF sense pulses to detect load changes at the RF interface of the reader. This allows the reader to reduce its RF field ON-duration and to switch to a power-saving state between the sense pulses (e.g. to enter a current-saving standby mode). Especially in an LPCD or u-LPCD mode, the NFC front-end is active over a long time (e.g., as long a vehicle is not opened). In such a case, it is difficult to detect that the NFC front-end is not properly functioning. For example, a malfunctioning of the NFC front-end would not necessarily be recognized by a host controller if the NFC front-end does not report an error to the host controller. The presently disclosed electromagnetic field detection makes it easier to recognize a malfunctioning of the NFC front-end. In particular, the output of the ADC 302 may be used as an interrupt by the host controller, for example in case of a voltage drop below an expected behavior. Then, the host controller may send an error message to an electronic control unit (ECU) of the vehicle, for example. Furthermore, a user and/or maintenance personnel may be informed about the malfunctioning NFC front-end.

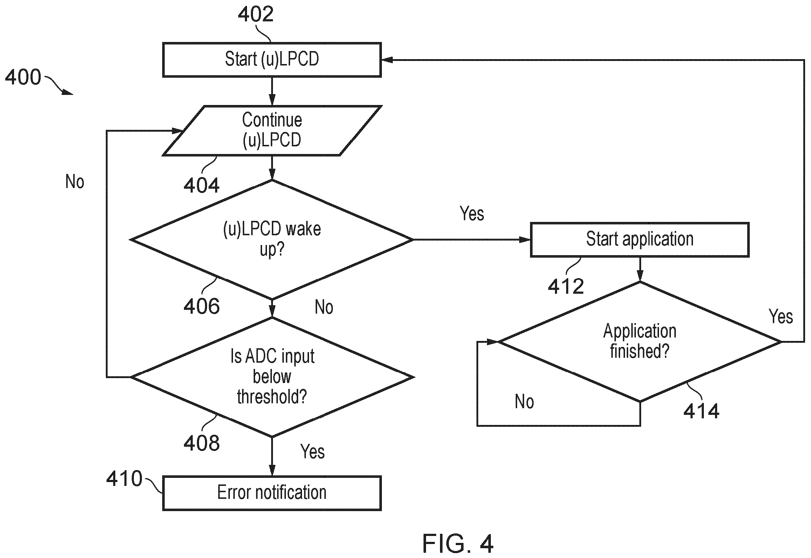

**Fig. 4** shows another illustrative embodiment of a method 400 of operating an NFC device. In particular, a flow chart is shown, containing a sequence of steps for testing whether an electromagnetic field is present on a main antenna of the NFC device, when the NFC device operates in an LPCD mode or in a u-LPCD mode. At 402, the LPCD or u-LPCD process is started. At 404, the LPCD or u-LPCD process continues, as long as it does not result in a wake-up of functional components of the NFC device, such as its NFC unit. If the LPCD or u-LPCD process results in a wake-up 406, an application is started 412 (e.g., an NFC-enabled transaction). If this application has finished 414, the sequence returns to step 402. If the LPCD or u-LPCD process has not resulted in a wake-up, for example after a predefined time out, it is checked 408 if the ADC input is below a predefined threshold. If so, then this is indicative of the absence of said electromagnetic field on the main antenna of the NFC device. In that case, an error notification 410 is generated. If the ADC input is not below the predefined threshold, the sequence returns to step 404.

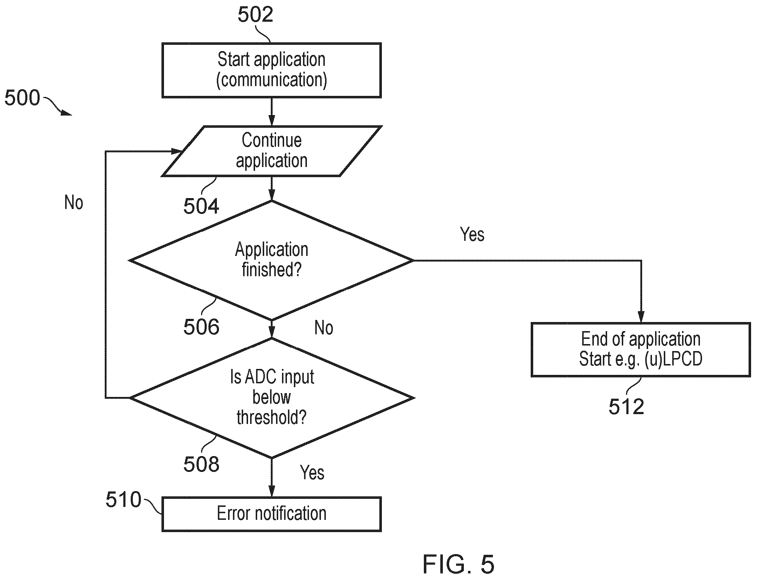

**Fig. 5** shows a further illustrative embodiment of a method 500 of operating an NFC device. In particular, a flow chart is shown, containing a sequence of steps for testing whether an electromagnetic field is present on a main antenna of the NFC device, when the NFC device operates in a regular communication mode. At 502, an application involving NFC communication is started (e.g., an NFC-enabled transaction). At 504, the application continues 504 to be executed. If the application has finished at 506, an LPCD or u-LPCD process may be started at 512. In that case, the NFC device enters into a low-power mode of operation. If the application has not finished, for example after a predefined time out, it is checked 508 if the ADC input is below a predefined threshold. If so, then this is indicative of the absence of said electromagnetic field on the main antenna of the NFC device. In that case, an error notification 510 is generated. If the ADC input is not below the predefined threshold, the sequence returns to step 504.

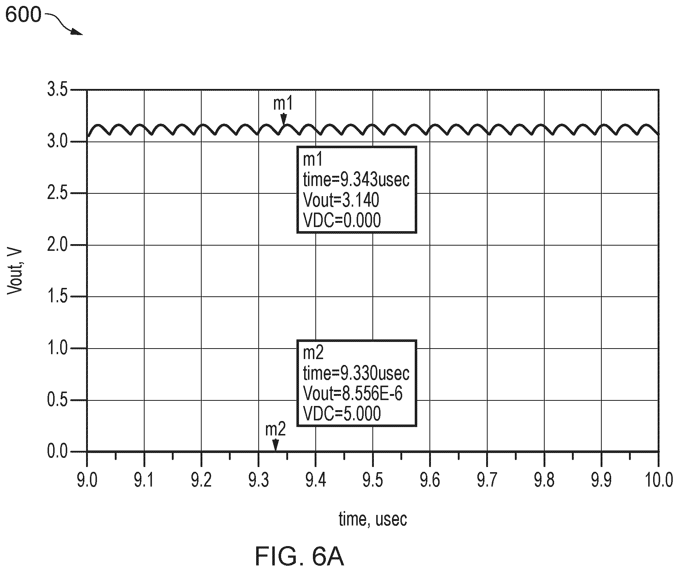

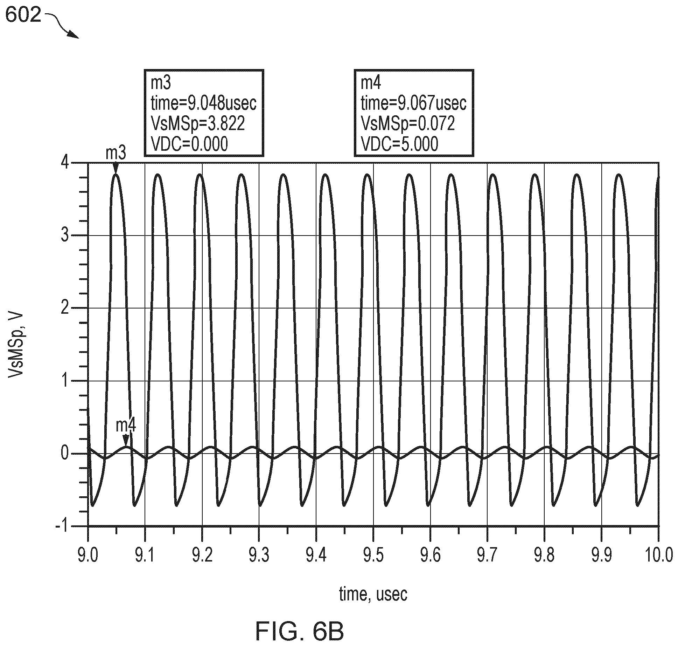

**Figs. 6A** **and** **6B** show simulation results 600, 602 for an NFC device of the kind set forth. In Figs. 6A and 6B, Vout refers to the rectified voltage at the output of the field detection unit. Furthermore, VDC refers to the gate voltage at the detuning switch (element 310 shown in Fig. 3), i.e., the control voltage by means of which the detuning switch is turned off and on. If VDC is high, the detuning switch is on and the antenna of the field detection unit is tuned away from the operating frequency of the main antenna. In contrast, if VDC is low, the detuning switch is off and the antenna of the field detection unit is tuned to the operating frequency of the main antenna, within a predefined margin (for example, 13.56 MHz +/- 1 MHz). In particular, at points m1 and m3 the detuning switch is off, while at m2 and m4 the detuning switch is on. Furthermore, VsMSp refers to the signal received by the antenna of the field detection unit; the suffix "p" means that it is the signal received on the "positive" branch of said antenna.

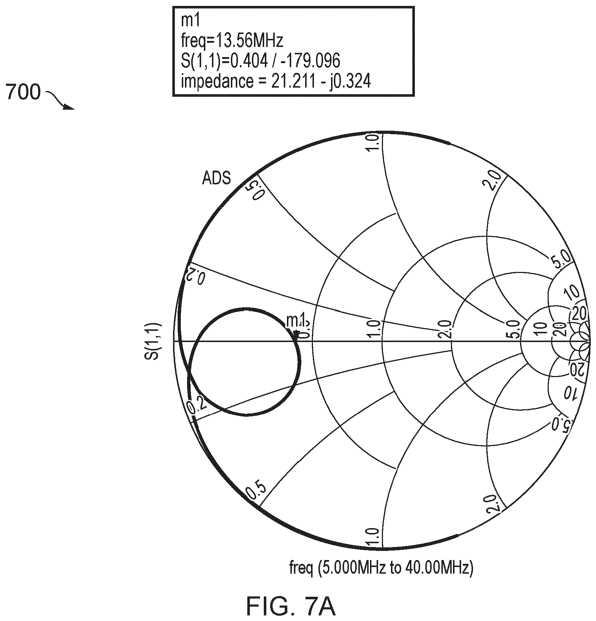

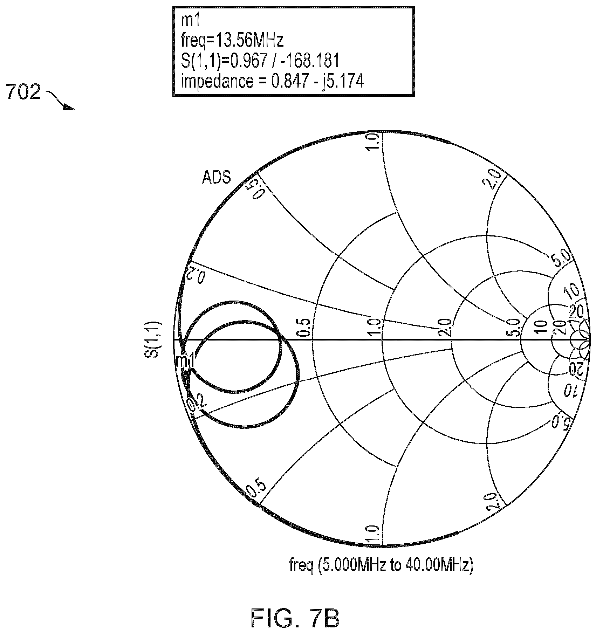

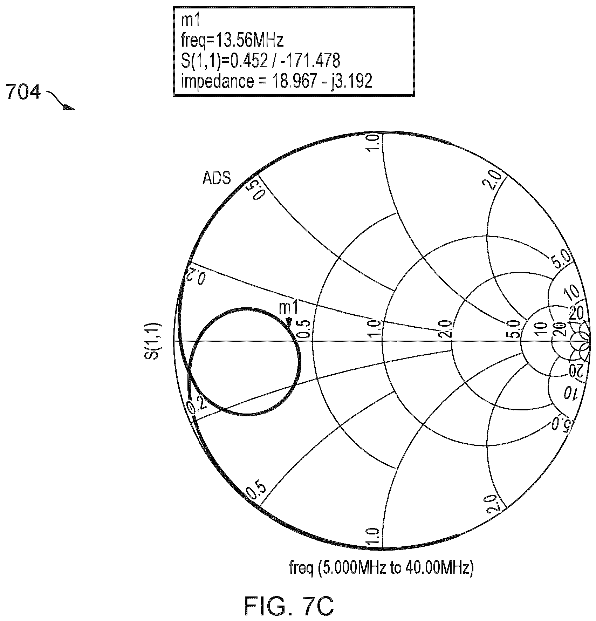

**Figs. 7A to 7C** show a simulated impedance 700, 702, 704 of an NFC antenna under test (i.e., of the main antenna of an NFC device of the kind set forth). In particular, Fig. 7A shows a default impedance of the antenna under test, Fig. 7B shows its impedance when the field detection unit has tuned its antenna to the operating frequency of the antenna under test (i.e., when the GPIO input of the field detection unit is 0V), and Fig. 7C shows its impedance when the field detection unit has tuned its antenna away from the operating frequency of the antenna under test (i.e., when the GPIO input of the field detection unit is 5V). In Fig. 7B a significant change of the impedance can be observed, while in Fig. 7C the change of the impedance is negligible. Thus, by tuning the antenna of the field detection unit away from the operating frequency of the main antenna, it is effectively avoided that the field detection unit causes a detuning of the impedance of the main antenna.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: NFC device
- 102: first NFC antenna
- 104: NFC unit
- 106: field detection unit
- 108: second NFC antenna
- 200: method of operating an NFC device
- 202: causing a field detection unit to be operated in a first state
- 204: detecting, by the field detection unit, when operated in the first state, whether an electromagnetic field is present on a first NFC antenna by tuning a second NFC antenna to the operating frequency of the first NFC antenna and by detecting whether said electromagnetic field is present on the second NFC antenna
- 300: field detection unit
- 302: analog-to-digital converter
- 304: filtering
- 306: full bridge rectifier
- 308: tuning capacitor
- 310: detuning switch
- 312: NFC antenna
- 400: method of operating an NFC device
- 402: start (u)LPCD
- 404: continue (u)LPCD
- 406: (u)LPCD wake up?
- 408: is ADC input below threshold?
- 410: error notification
- 412: start application
- 414: application finished?
- 500: method of operating an NFC device
- 502: start application (communication)
- 504: continue application
- 506: application finished?
- 508: is ADC input below threshold?
- 510: error notification
- 512: end of application, start e.g. (u)LPCD
- 600: simulation result
- 602: simulation result
- 700: simulated impedance of NFC antenna under test
- 702: simulated impedance of NFC antenna under test
- 704: simulated impedance of NFC antenna under test

## Claims

1. A near field communication, NFC, device, comprising:
a first NFC antenna;
an NFC unit operatively coupled to said first NFC antenna;
a field detection unit comprising a second NFC antenna, wherein said field detection unit is configured to detect, when operated in a first state, whether an electromagnetic field is present on the first NFC antenna by tuning the second NFC antenna to the operating frequency of the first NFC antenna and by detecting whether said electromagnetic field is present on the second NFC antenna.

2. The NFC device of claim 1, wherein the field detection unit is further configured to tune, when operated in a second state, the second NFC antenna away from the operating frequency of the first NFC antenna.

3. The NFC device of claim 2, wherein the field detection unit further comprises a controllable switch and a plurality of capacitors coupled to said switch, wherein said capacitors are configured to be shorted to ground by controlling said switch, so as to tune the second NFC antenna away from said operating frequency of the first NFC antenna.

4. The NFC device of claim 3, further comprising an analog-to-digital converter, ADC, wherein the field detection unit further comprises a tuning capacitor coupled to the switch, a rectifier coupled to the tuning capacitor, and a filter coupled to the rectifier and to an input of said ADC.

5. The NFC device of claim 4, wherein the rectifier is a full bridge rectifier or a half bridge rectifier.

6. The NFC device of claim 4 or 5, further comprising a controller configured to receive an output of the ADC.

7. The NFC device of claim 6, wherein the controller is configured to generate an error message if the output of the ADC indicates that the electromagnetic field is not present on the second NFC antenna.

8. The NFC device of any preceding claim, wherein the field detection unit is configured to be operated in the first state when the NFC device operates in a low-power card detection, LPCD, mode or in an ultra-low-power card detection, u-LPCD, mode.

9. The NFC device of any one of claims 1 to 7, wherein the field detection unit is configured to be operated in the first state when the NFC device operates in a regular communication mode.

10. A vehicle comprising the NFC device of any preceding claim.

11. A method of operating a near field communication, NFC, device, the NFC device comprising a first NFC antenna, an NFC unit operatively coupled to the first NFC antenna, and a field detection unit including a second NFC antenna, the method comprising:
causing the field detection unit to be operated in a first state;
detecting, by the field detection unit, when operated in the first state, whether an electromagnetic field is present on the first NFC antenna by tuning the second NFC antenna to the operating frequency of the first NFC antenna and by detecting whether said electromagnetic field is present on the second NFC antenna.

12. The method of claim 11, further comprising causing the field detection unit to be operated in a second state, wherein the field detection unit, when operated in the second state, tunes the second NFC antenna away from the operating frequency of the first NFC antenna.

13. The method of claim 12, wherein the field detection unit further comprises a controllable switch and a plurality of capacitors coupled to said switch, and wherein the method comprises shorting said capacitors to ground by controlling said switch, so as to tune the second NFC antenna away from said operating frequency of the first NFC antenna.

14. The method of any one of claims 11 to 13, wherein the field detection unit is caused to be operated in the first state when the NFC device operates in a low-power card detection, LPCD, mode or in an ultra-low-power card detection, u-LPCD, mode.

15. The method of any one of claims 11 to 13, wherein the field detection unit is caused to be operated in the first state when the NFC device operates in a regular communication mode.

## Amended claims

### Amended claims in accordance with Rule 137(2) EPC.

1. A near field communication, NFC, device (100), comprising:
a first NFC antenna (102);
an NFC unit (104) operatively coupled to said first NFC antenna (102);
a field detection unit (106) comprising a second NFC antenna (108), wherein said field detection unit (106) is configured to detect, when operated in a first state, whether an electromagnetic field is present on the first NFC antenna (102) by tuning the second NFC antenna (108) to the operating frequency of the first NFC antenna (102) and by detecting whether said electromagnetic field is present on the second NFC antenna (108);
wherein the field detection unit (106) is further configured to tune, when operated in a second state, the second NFC antenna (108) away from the operating frequency of the first NFC antenna (102).

2. The NFC device (100) of claim 1, wherein the field detection unit (106) further comprises a controllable switch and a plurality of capacitors coupled to said switch, wherein said capacitors are configured to be shorted to ground by controlling said switch, so as to tune the second NFC antenna (108) away from said operating frequency of the first NFC antenna (102).

3. The NFC device (100) of claim 2, further comprising an analog-to-digital converter, ADC, wherein the field detection unit (106) further comprises a tuning capacitor coupled to the switch, a rectifier coupled to the tuning capacitor, and a filter coupled to the rectifier and to an input of said ADC.

4. The NFC device (100) of claim 3, wherein the rectifier is a full bridge rectifier or a half bridge rectifier.

5. The NFC device (100) of claim 3 or 4, further comprising a controller configured to receive an output of the ADC.

6. The NFC device (100) of claim 5, wherein the controller is configured to generate an error message if the output of the ADC indicates that the electromagnetic field is not present on the second NFC antenna (108).

7. The NFC device (100) of any preceding claim, wherein the field detection unit (106) is configured to be operated in the first state when the NFC device (100) operates in a low-power card detection, LPCD, mode or in an ultra-low-power card detection, u-LPCD, mode.

8. The NFC device (100) of any one of claims 1 to 6, wherein the field detection unit (106) is configured to be operated in the first state when the NFC device (100) operates in a regular communication mode.

9. A vehicle comprising the NFC device (100) of any preceding claim.

10. A method (200) of operating a near field communication, NFC, device, the NFC device comprising a first NFC antenna, an NFC unit operatively coupled to the first NFC antenna, and a field detection unit including a second NFC antenna, the method comprising:
causing (202) the field detection unit to be operated in a first state;
detecting (204), by the field detection unit, when operated in the first state, whether an electromagnetic field is present on the first NFC antenna by tuning the second NFC antenna to the operating frequency of the first NFC antenna and by detecting whether said electromagnetic field is present on the second NFC antenna;
causing the field detection unit to be operated in a second state, wherein the field detection unit, when operated in the second state, tunes the second NFC antenna away from the operating frequency of the first NFC antenna.

11. The method (200) of claim 10, wherein the field detection unit further comprises a controllable switch and a plurality of capacitors coupled to said switch, and wherein the method comprises shorting said capacitors to ground by controlling said switch, so as to tune the second NFC antenna away from said operating frequency of the first NFC antenna.

12. The method (200) of claim 10 or 11, wherein the field detection unit is caused to be operated in the first state when the NFC device operates in a low-power card detection, LPCD, mode or in an ultra-low-power card detection, u-LPCD, mode.

13. The method (200) of claim 10 or 11, wherein the field detection unit is caused to be operated in the first state when the NFC device operates in a regular communication mode.
